Europäisches Patentamt

**European Patent Office**

**Office européen des brevets**

(19)

(11) Veröffentlichungsnummer: **0 358 941 B1**

(12)

# EUROPÄISCHE PATENTSCHRIFT

(45) Veröffentlichungstag der Patentschrift: **23.12.92**

(51) Int. Cl.5: **E06B 1/64**, F16B 5/12

(21) Anmeldenummer: **89114634.2**

(22) Anmeldetag: **08.08.89**

(54) **Wandanschlussverkleidung.**

(30) Priorität: **11.08.88 DE 3827223**

(43) Veröffentlichungstag der Anmeldung:
**21.03.90 Patentblatt 90/12**

(45) Bekanntmachung des Hinweises auf die
Patenterteilung:
**23.12.92 Patentblatt 92/52**

(84) Benannte Vertragsstaaten:
**BE DE LU NL**

(56) Entgegenhaltungen:
DE-A- 2 452 873    DE-A- 2 557 057
DE-A- 3 024 693    DE-A- 3 412 823
NL-A- 8 600 119    US-A- 3 797 185

(73) Patentinhaber: **HÜLS TROISDORF AKTIENGE-
SELLSCHAFT**
**Postfach 11 65**
**W-5210 Troisdorf(DE)**

(72) Erfinder: **Ahrens, Maik**
**Am Telegraph**
**W-5202 Hennef-Söven(DE)**
Erfinder: **Budich, Wolfgang**
**Rubensstrasse 121**
**W-5210 Troisdorf-Eschmar(DE)**
Erfinder: **Büscher, Hans**
**Auf dem Axberg 27**
**W-5210 Troisdorf(DE)**

EP 0 358 941 B1

## Beschreibung

Die Erfindung betrifft eine Wandanschlußverkleidung zum Verkleiden von Wandanschlüssen und Wandlaibungen wie Fensterrahmen-Montagezargen gemäß dem Oberbegriff des Anspruchs 1.

Insbesondere in den Niederlanden ist es üblich, zur späteren Montage von Fensterrahmen Montagezargen aus Holz in die Wand einzumauern. Die Fensterrahmen werden anschließend, insbesondere von der Außenseite, an diese Montagezargen geschraubt, während der Übergang von der Montagezarge zum Mauerwerk an der Rauminnenseite beigeputzt wird. Bedingt durch die Verwendung unterschiedlicher Materialien - Kunststoff oder Aluminium für den Fensterrahmen, Holz für die Montagezarge und das Mauer werk - muß dieser Wandanschluß anschließend mit einer Wandschlußverkleidung verkleidet werden. Es ist bekannt, solche Wandanschlußverkleidungen als einfache, flache Holzprofile auszuführen, die mit Dichtungsbändern oder dauerelastischem Fugenmaterial gegenüber dem Fensterrahmen und der Montagezarge sowie dem Mauerwerk abgedichtet werden müssen.

Diese bekannten Wandanschlußverkleidungen sind aufwendig in der Montage und - bedingt durch das gegenüber dem Fensterrahmen unterschiedliche Material - optisch unbefriedigend. Weiterhin war es nahezu unmöglich, den Übergang von Wandanschlußprofil zum Fensterrahmen dauerhaft abzudichten.

Aus der US-PS 3,797,185 ist eine gattungsmäße Verkleidung mit etwa L-förmigem Querschnitt bekannt. Diese Verkleidung ist nur zur Verkleidung von Wandecken geeignet und führt zudem zu einer mangelhaften Abdichtung zwischen dem Verkleidungsprofil und der senkrecht zur Wandschlußverkleidung verlaufenden Anschlußfläche (Fensterrahmen).

Die NL-A-86 00 119 beschreibt eine gattungsgemäße Wandanschlußverkleidung. Diese weist den Nachteil auf, daß das Halteteil nur mittels zusätzlicher Zwischen- bzw. Klemmteile an der Anschlußfläche bzw. dem Fensterprofil fixiert werden kann. Weiterhin ist diese bekannte Wandanschlußverkleidung nicht in der Lage, bei bereits bestehenden Konstruktionen nachträglich montiert werden zu können. Schließlich können hiermit keine Höhentoleranzen der senkrecht zum Wandanschluß verlaufenden Anschlußfläche (Höhe des Spaltes zwischen der Wand und dem Fensterrahmen) ausgeglichen werden.

Aufgabe der vorliegenden Erfindung ist es, eine einfach zu montierende Wandanschlußverkleidung zur Verfügung zu stellen, die diese Nachteile vermeidet.

Die Erfindung löst diese Aufgabe durch eine gattungsgemäße Wandanschlußverkleidung, wobei das (die) Halteteil(e) wenigstens einen Anschlag zur definierten Ausrichtung des (der) Halteteils(e) gegenüber der senkrecht zur Wandanschlußverkleidung verlaufenden Anschlußfläche und das Verkleidungsprofil eine im wesentlichen ebene Form mit etwa rechteckigem Querschnitt aufweist.

Um eine definierte Ausrichtung des Verkleidungsprofils gegenüber dem Fensterrahmen zu garantieren, ist vorgesehen, daß das (die) Halteteil(e) je einen oder mehrere Anlageflächen (Anschlag) aufweist (aufweisen). Bei der Montage des Halteteils, beispielsweise mittels Schrauben, Nägeln oder Klammern, werden die Anschlagflächen an den Fensterrahmen angelegt, so daß die Klipsverbindungen immer einen definierten Abstand zum Fensterrahmen aufweisen. Die Montage der Kalteteile kann somit ohne Schablone erfolgen.

Nach einer bevorzugten Ausführung der Erfindung weist (weisen) das (die) Halteteil(e) wenigstens zwei Rastlaschen auf, die im Abstand zueinander angeordnet sind und ein Einrasten in entsprechende, sich in Längsrichtung des Verkleidungsprofils erstreckende, hinterschnittene Nuten des Verkleidungsprofils ermöglichen.

Bevorzugt wird durch eine oder mehrere Fixiernasen am Halteteil ein Verdrehen des Halteteils gegenüber dem Wandanschluß bei der Montage des Halteteils verhindert.

Die erfindungsgemäße Wandanschlußverkleidung wird bevorzugt aus Kunststoff gefertigt, bei Aluminiumfenstern ggf. aus Aluminium, wobei die Halteteile vorteilhaft im Spritzgußverfahren (Druckgußverfahren) hergestellt und das Verkleidungsprofil extrudiert wird. Ggf. kann als Halteteil auch ein extrudiertes Profil verwendet werden, ggf. kann das Halteteil auch aus z.B. Federstahl gestanzt werden.

Die Erfindung wird nachfolgend anhand eines Ausführungsbeispiels sowie der Zeichnung erläutert.

Es zeigen dabei

Figur 1    einen Querschnitt durch ein Fenster mit Montagezarge und erfindungsgemäßer Wandanschlußverkleidung und

Figur 2    ein Halteteil in drei Ansichten und perspektivischer Ansicht.

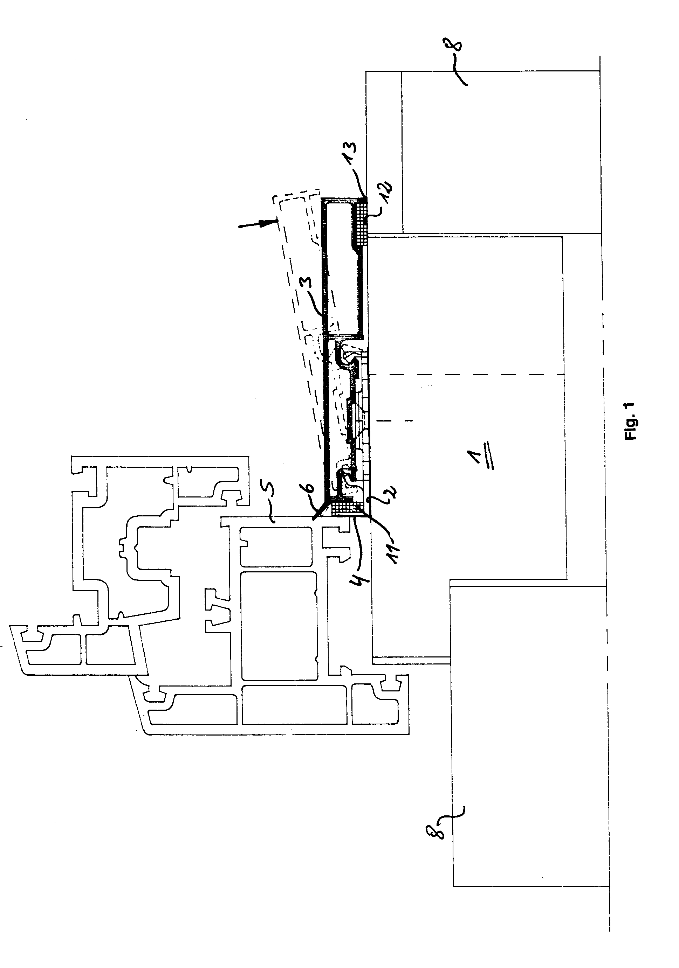

In Figur 1 ist ein Querschnitt durch eine Fensterkonstruktion dargestellt, wie sie z.B. in den Niederlanden verbreitet ist: im Mauerwerk 8 ist eine Montagezarge 1 aus Holz verankert, an der der Fensterrahmen 5 befestigt ist. Die ohne Wandschlußverkleidung sichtbare Oberfläche der Montagezarge 1 wird auch als Wandlaibung bezeichnet. Zur Verkleidung dieser Wandlaibung werden im Abstand von ca. 25 cm je ein Halteteil 2 auf die Oberseite der Montagezarge 1 geschraubt, genagelt oder geklammert. Die Anschläge 4, die als kleine, senkrecht von der Grundfläche abstehende Laschen ausgebildet sind, dienen der genauen Ausrichtung der Halteteile 2 gegenüber dem Fensterrahmen 5.

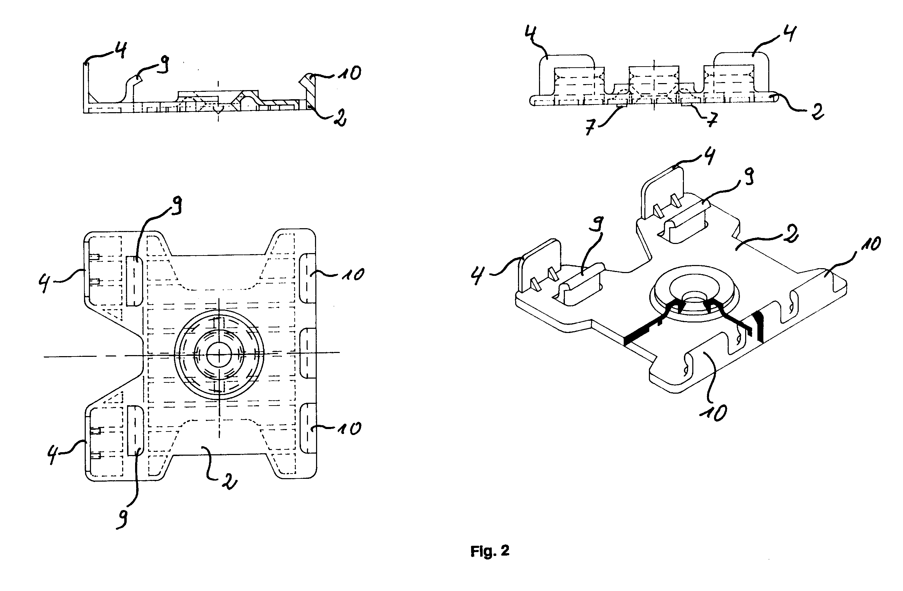

In Figur 2 sind über die ebene Unterseite des Halteteils 2 vorspringende Fixiernasen 7 zu erkennen, die sich beim Anschrauben des Halteteils 2 in das weiche Material der Holzzarge 1 eindrücken und so ein Verdrehen des Halteteils 2 verhindern.

Nach der Montage der Halteteile 2 wird das Verkleidungsprofil 3 mit der anextrudierten Weichlippe 6 an den Fensterrahmen 5 angedrückt und in einem Winkel von ca. 10° in die Rastlaschen 9 des Halteteils 2 eingesetzt und anschließend in die Rastlaschen 10 eingerastet. In Figur 1 ist die Montage gestrichelt dargestellt. Zusätzlich zur Abdichtung über die Weichlippe 6 sind im Ausführungsbeispiel noch zwei Dichtungsbänder bzw. Dichtungsmassen 11 und 12 vorgesehen.

Im Bedarfsfalle kann das Verkleidungsprofil 3 durch Anheben an der Kante 13 wieder abgehebelt werden, wobei allerdings ein wesentlich größerer Kraftaufwand als bei der Montage notwendig ist.

Im dargestellten Ausführungsbeispiel ist das Verkleidungsprofil 3 als flaches Doppelhohlkammerprofil ausgeführt.

## Patentansprüche

1. Wandanschlußverkleidung zum Verkleiden von Wandanschlüssen und Wandlaibungen wie Fensterrahmen-Montagezargen (1), wobei die Wandanschlußverkleidung aus wenigstens einem Halteteil (2) und einem Verkleidungsprofil (3) besteht, wobei das (die) Halteteil(e) (2) an dem zu verkleidenden Wandanschluß befestigbar ist (sind) und das Verkleidungsprofil (3) durch Aufklipsen mit dem (den) Halteteil(en) (2) verbunden werden kann und wobei das Verkleidungsprofil (3) eine elastische Lippe (6) aufweist, die nach dem Aufklipsen des Verkleidungsprofils (3) auf das (die) Halteteil(e) (2) gegen eine senkrecht zur Wandanschlußverkleidung verlaufende Anschlußfläche, beispielsweise der Innenseite eines Fensterrahmens (5), angepreßt wird, *dadurch gekennzeichnet,* daß das Halteteil (2) wenigstens einen Anschlag (4) zur definierten Ausrichtung des Halteteils (2) gegenüber der senkrecht zur Wandanschlußverkleidung verlaufenden Anschlußfläche und das Verkleidungsprofil (3) eine im wesentlichen ebene Form mit etwa rechteckigem Querschnitt aufweist.

2. Wandanschlußverkleidung nach Anspruch 1, *dadurch gekennzeichnet,* daß das (die) Halteteil(e) (2) wenigstens zwei Rastlaschen (9, 10) aufweist (aufweisen), die im Abstand zueinander angeordnet sind und ein Einrasten in entsprechende, sich in Längsrichtung des Verkleidungsprofils (3) erstreckende, hinterschnittene Nuten des Verkleidungsprofils (3) ermöglichen.

3. Wandverkleidung nach einem der Ansprüche 1 oder 2, *dadurch gekennzeichnet,* daß das Halteteil (2) eine oder mehrere Fixiernasen (7) aufweist, die ein Verdrehen des Halteteils (2) gegenüber dem Wandanschluß bei der Montage des Halteteils (2) verhindern.

4. Wandanschlußverkleidung nach einem der Ansprüche 1 bis 3, *dadurch gekennzeichnet,* daß das Halteteil (2) als Spritzgußteil und das Verkleidungsprofil (3) als extrudiertes Profil ausgeführt sind.

## Claims

1. Wall connection facing for the facing of wall connections and wall soffits, such as window frame mounting cases (1), wherein the wall connection facing consists of at least one holding part (2) and a facing sectional member (3), the holding part or parts (2) being adapted to be fastened to the wall connection which is to be faced, and the facing sectional member (3) being able to be joined by clipping to the holding part or parts (2), while the facing sectional member (3) has an elastic lip (6) which is pressed against a connection surface extending at right angles to the wall connection facing, for example the inner side of a window frame (5), after the facing sectional member (3) has been clipped onto the holding part or parts (2), characterised in that the holding part (2) has at least one stop (4) for the defined alignment of the holding part (2) in relation to the connection surface extending at right angles to the wall connection facing and the facing sectional member (3) has a substantially plane shape with an approximately rectangular cross-section.

2. Wall connection facing according to Claim 1, characterised in that the holding part or parts (2) has or have at least two catch members (9, 10) which are disposed at a distance from one another and permit locking engagement in corresponding undercut grooves provided in the facing sectional member (3) and extending in the longitudinal direction of the facing sectional member (3).

3. Wall facing according to one of Claims 1 or 2, characterised in that the holding part (2) has one or more fastening lugs (7) which prevent turning of the holding part (2) relative to the wall connection during the mounting of the holding part (2).

4. Wall connection facing according to one of Claims 1 to 3, characterised in that the holding part (2) is made in the form of an injection moulding or pressure die casting and the facing sectional member (3) in the form of an extruded section.

**Revendications**

1. Parement pour jointures murales destiné à couvrir des jointures murales et des intrados tels que des huisseries d'assemblage (1) pour châssis de fenêtres, ledit parement pour jointures murales se composant d'au moins une pièce de fixation (2) et d'un profilé de parement (3), la (les) pièce(s) de fixation (2) pouvant être fixée(s) sur la jointure murale à couvrir et le profilé de parement (3) pouvant être raccordé à la (aux) pièce(s) de fixation (2) par clipsage, et le profilé de parement (3) présentant une lèvre élastique (6) qui est appliquée par pression contre une surface de jointure verticale par rapport au parement pour jointures murales, par exemple la face intérieure d'un châssis de fenêtre (5), après clipsage du profilé de parement (3) sur la (les) pièce(s) de fixation (2), parement caractérisé en ce que la pièce de fixation (2) présente au moins une butée (4) pour positionner de manière précise la pièce de fixation (2) par rapport à la surface de jointure orientée verticalement par rapport au parement pour jointures murales et en ce que le profité de parement (3) est de forme sensiblement plane et de section transversale à peu près rectangulaire.

2. Parement pour jointures murales suivant la revendication 1, caractérisé en ce que la (les) pièce(s) de fixation présente(nt) au moins deux pattes de verrouillage (9, 10) qui sont placées à distance l'une de l'autre et autorisant un verrouillage dans des encoches en contre-dépouille correspondantes du profité de parement (3) étendues dans le sens de la longueur dudit profilé de parement (3).

3. Parement pour jointures murales suivant l'une quelconque des revendications 1 ou 2, caractérisé en ce que la pièce de fixation (2) présente un ou plusieurs ergots de fixation (7) qui empêchent la pièce de fixation (2) de tourner par rapport au parement de jointures murales au moment du montage de la pièce de fixation (2).

4. Parement de jointures murales suivant l'une quelconque des revendications 1 à 3, caractérisé en ce que la pièce de fixation (2) est réalisée sous forme de pièce moulée par injection et le profilé de parement (3) sous forme de profil extrudé.

Fig. 1

EP 0 358 941 B1

Fig. 2